# EUROPEAN PATENT APPLICATION

(11) **EP 2 266 839 A1**
(43) Date of publication of application: **29.12.2010**
(21) Application number: 10166132.0
(22) Date of filing: 16.06.2010
(51) Int. Cl.: B60Q 11/00

(54) **Light system for a motor vehicle and a method thereof**

(30) Priority: 23.06.2009 SE 0900851
(71) Applicant: Scania CV AB, 151 87 Södertälje (SE)
(72) Inventor: Karlsson, Alf, 647 30, Mariefred (SE)

(57) **Abstract**

The present invention relates to a light system (1) for a motor vehicle comprising at least a first (2) and a second (3) set of lights, each set of lights including at least two light sources (4) which are arranged to emit light when being power supplied. The light system (1) further comprises at least a first (5) and a second (6) power supply, wherein the first (5) and second (6) power supplies are different from each other; and the first power (5) supply is arranged to supply power to at least a first light source (4) belonging to the first set (2) of lights and at least a second light source (4) belonging to the second set (3) of lights, and the second power supply (6) is arranged to supply power to at least a second light source belonging to the first set (2) of lights and to at least a first light source belonging to the second set (3) of lights. The invention also relates to a method for connecting a light system (1) and to a motor vehicle provided with such a light system (1).

## Description

### Technical Field

The present invention relates to a light system for a motor vehicle, or more particularly to a light system according to the preamble of claim 1. Furthermore, the present invention also relates to a method thereof, and a motor vehicle provided with such a light system.

### Background of the Invention

A light system of a motor vehicle may, according to one aspect, relate to different light functions of a motor vehicle and may be divided into exterior and interior lights. Interior lights are often used for illuminating some interior area of the motor vehicle such as a cabin, engine compartment or luggage compartment, but may have other functions.

The exterior lights of the motor vehicle are mainly used for illuminating an area around and/or in front of the particular lights and for displaying signalling information. The illumination function of the exterior lights is obvious and relates to improved visibility, e.g. when driving in the dark or in near dark conditions. The functions relating to displaying information usually concern position, direction of travel, and size of the motor vehicle. Position lights, fog lights and brake lights are example of exterior lights which provide these types of functions. The placement and some design aspects of the exterior lights are usually regulated by international conventions and national law concerning road safety.

It is realised that the lights of a motor vehicle have important functions, and therefore it is essential that a motor vehicle is provided with a safe and robust light system.

Document US2003/0184233 A1 discloses a secondary headlight system for detecting and compensating for failure of a motor vehicles low beam headlight. The system comprises detecting means and compensating means arranged so that the secondary headlight system is automatically activated, resulting in illumination of a high beam headlight of the motor vehicle, if the low beam headlight fails.

Document EP1535798 A1 shows a method and a device, arranged between a switch and a lamp, for controlling a lamp of a motor vehicle. The device comprises a first driving circuit, a first driving means, a first control system and a second control system, wherein the first control system is arranged to turning on the lamp, and the second control system is arranged to turning on the lamp by controlling a drive state of the first driving means.

### Summary of the Invention

An object of the present invention is to provide a safe and robust light system for a motor vehicle, such as a truck, tractor, towing vehicle or car. Another object of the invention is to provide an alternative architecture for a light system in a motor vehicle.

According to one aspect of the present invention, the above-mentioned objects are achieved by a light system for a motor vehicle comprising at least a first and a second set of lights, each set of lights including at least two light sources which are arranged to emit light when being power supplied. The light system further comprises at least a first and a second power supply, wherein the first and second power supplies are different from each other; and the first power supply is arranged to supply power to at least a first light source belonging to the first set of lights and to at least a second light source belonging to the second set of lights, and the second power supply is arranged to supply power to at least a second light source belonging to the first set of lights and to at least a first light source belonging to the second set of lights.

According to another aspect of the invention the aforementioned objects are achieved by a method for connecting a light system in a motor vehicle comprising at least a first and second set of lights, each set of lights including at least two light sources which are arranged to emit light when being power supplied. The method comprises the steps of: connecting a first power supply to at least a first light source belonging to the first set of lights and to at least a second light source belonging to the second set of lights, and connecting a second power supply to at least a second light source belonging to the first set of lights and to at least a first light source belonging to the second set of lights, wherein the first and second power supplies are different from each other.

According to yet another aspect of the invention a motor vehicle is provided with a light system according to the invention.

A light system and a method thereof, according to the invention, provide a safe and robust light system. The invention presents a new light system architecture which makes it possible to define a plurality of sets of lights and arrange at least two power supplies so that at least one light in each of the plurality of sets of lights can function correct, even if one of the power supplies fails. That is, a minimum number of lights may function which improves the safety aspects of the motor vehicle when operating the same.

With a light system according to the invention e.g. no secondary or auxiliary light systems are needed and still provide a safe and robust light system. Thereby, cost for manufacture and assembly is reduced.

Other advantages and applications of the present invention will be apparent from the following detailed description of the invention.

### Brief Description of the Drawings

The appended drawings are intended to clarify and explain the present invention, in which:
- Figure 1 schematically shows a prior art light system;
- Figure 2 schematically shows an embodiment of a light system according to the present invention;
- Figure 3 schematically shows a first and a second power supply connected to a single power source;
- Figure 4 shows the first and second power supplies connected to two serially connected power sources;
- Figure 5 shows the first and second power supplies connected to different power sources;
- Figure 6 shows another embodiment of a light system according to the invention; and
- Figure 7 shows yet another embodiment of a light system according to the invention.

### Detailed Description of the Invention

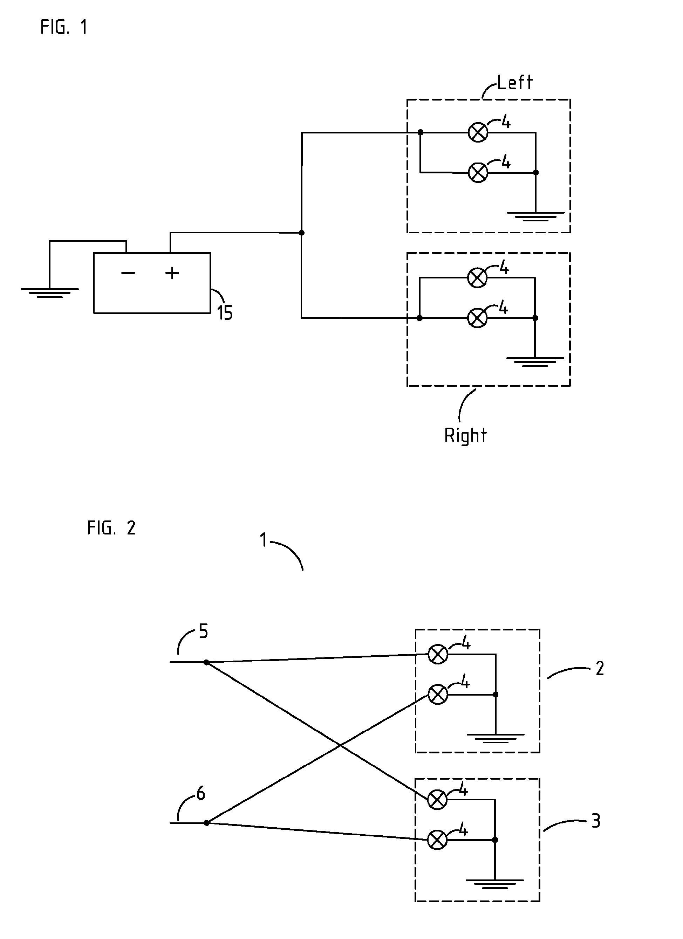

In Figure 1 a prior art light system for a motor vehicle is schematically illustrated. This particular prior art light system has two left lamps and two right lamps. The four lamps are connected to a common power supply, which in turn is connected to a power source, such as a battery. If the power supply for some reason fails, all four lamps will go out, and no illumination of the lamps and/or information relating to position, direction of travel, and size of the motor vehicle will be displayed. It is realised that this situation could lead to a traffic accident or any other disturbing accident due to the important functions of the lamps if they e.g. should be exterior lights.

Figure 2 schematically shows an embodiment of a light system 1 according to the present invention. The light system 1 comprises in this embodiment a first 2 and a second 3 set of lights, each having at least two light sources 4. A configuration with two sets of lights 2, 3 could be useful since most of the exterior lights, such as head lights, side marking lights and dipped headlights are pare-wise arranged on the motor vehicle, and often arranged on the left and right side of the motor vehicle. Hence, such types of exterior lights may be divided into at least two logic sets; in this case the first 2 and second 3 sets of lights correspond to the left and right lights of the motor vehicle, respectively.

Further, the light sources 4 are electrically connected to a first 5 and a second 6 power supply, which are arranged to supply power to the light sources 4 in the two different sets. The light sources 4 may e.g. be lamps in front fog light, head light, dipped headlight, side marker light, front parking light, brake light, rear fog light, rear parking light, or any other suitable light for a motor vehicle.

The first power supply 5 is electrically connected to a light source 4 belonging to the first set of light sources 2 and to a light source 4 belonging to the second set of light sources 3, and reversely, the second power supply 6 is electrically connected to another light source 4 in the first set of light sources 2 and to another light source 4 in the second set of light sources 3, which is shown in Figure 2.

That is, according to the invention, the first 5 and second 6 power supplies should be connected to different light sources 4 belonging to the same set of light sources 2, 3, and at the same time be connected to at least one light source 4 in each set of light sources 2, 3 belonging to the light system 1. Hence, electrically cross connecting power supplies 5, 6 with different light sources 4 belonging to different sets of light sources 2, 3 as shown in Figure 2. Therefore, if e.g. the first power supply 5 fails, at least one light source 4 in the first set of lights 2 and at least one light source 4 in the second set of lights 3 will be able to receive power from the first power supply 5, and the same reasoning applies, *mutatis mutandis*, if the second power supply 6 fails, which means that at least one light source 4 in each set 2, 3 can be supplied with power. So, e.g. if the first set 2 corresponds to left lights and the second set 3 corresponds to right lights, then both left and right position will be indicated even if one of the power supplies 5, 6 fails. Also, some illuminating function on both sides of the motor vehicle can be maintained e.g. if the left and right lights should comprise dipped beams and fog lights. Hence, even if a power supply 5, 6 fails, the driver may e.g. safely take the motor vehicle from a road or a motorway to a safe place.

In an embodiment of the invention, each first 5 and second 6 power supply comprises a fuse 14, preferably with a standardised ampere rating for motor vehicles, and being connected to a power source 15. The fuse 14 protects the electrical wiring and electrical equipment of the motor vehicle from over current, which could lead to burn and/or malfunction.

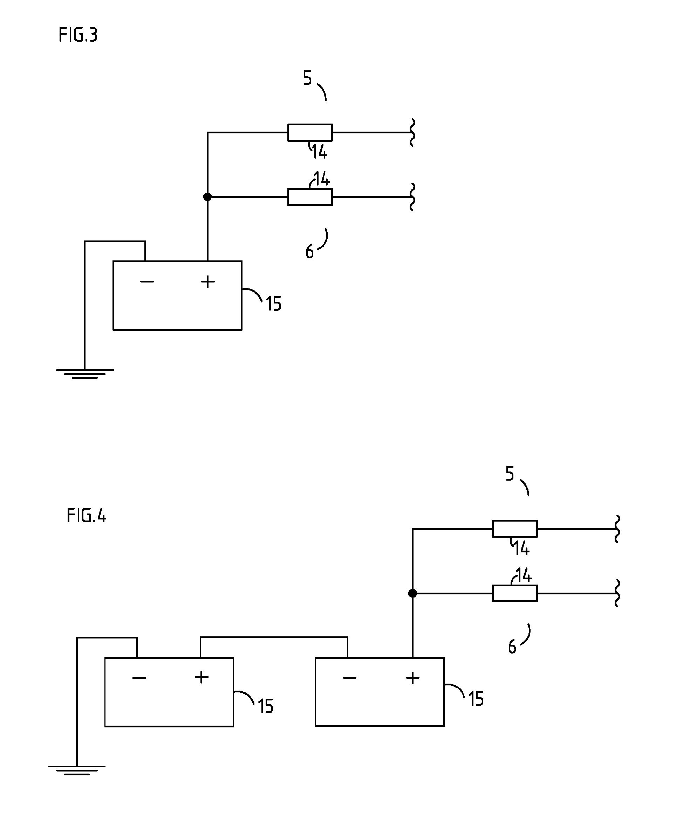

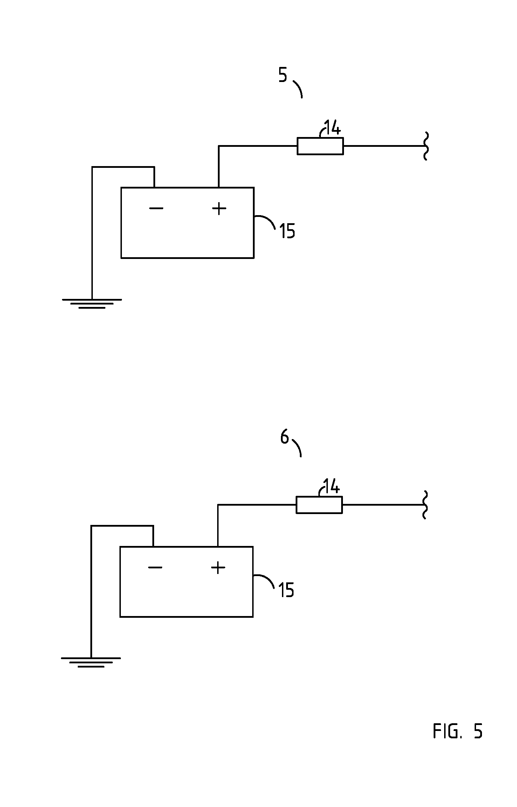

Figure 3 shows schematically the first 5 and second 6 power supplies connected to the same power source 15, in this case a battery feeding 12 V to the light system 1, and Figure 4 shows the first 5 and second 6 power supplies connected to two serially connected batteries together feeding 24 V (12V + 12V) commonly used in heavy motor vehicles, such as trucks (the light sources 4 are not shown in Figure 3 or Figure 4). Yet another embodiment of the invention is shown in Figure 5 in which the first 5 and second 6 power supplies are electrically connected to different power sources 15 feeding, e.g.
12V or 24 V each (the latter if e.g. two batteries are serially connected as shown in Figure 4).

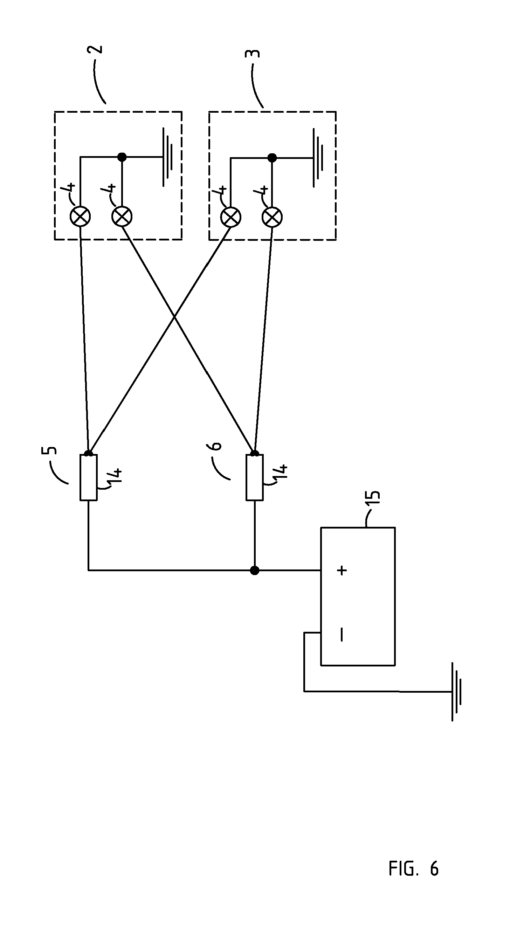

Figure 6 shows another embodiment of a light system 1 according to the invention, in which a first 5 and a second 6 power supply each comprises a fuse 14 which are connected to the same power source 15. The light system 1 in this embodiment also includes a first 2 and second 3 sets of lights comprising two light sources 4 each. The power supplies 5, 6 are electrically cross connected to the light sources 4 in the two sets 2, 3 according to the invention as shown in the Figure.

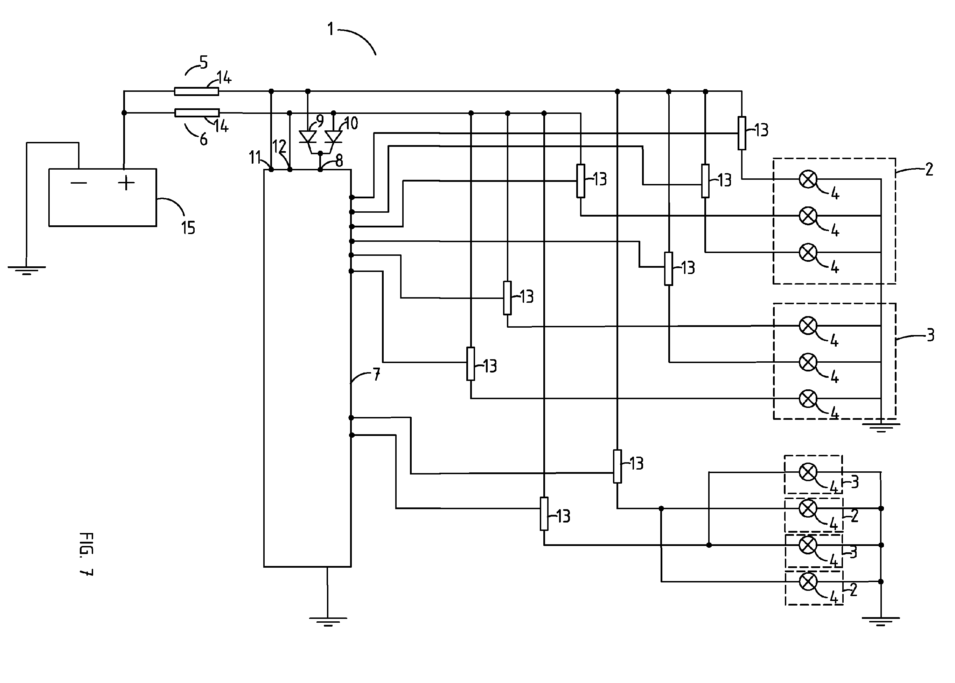

Figure 7 shows yet another embodiment of the invention in which each of the first 5 and second 6 power supplies comprises a fuse 14 and is electrically connected to a battery. The light system 1 in this embodiment also comprises a control unit 7 including a processor arranged to execute control software.
The control unit 7 is connected to each light source 4 by means of control wiring between control outputs of the control unit 7 and smart drivers 13, and
between the smart drivers 13 and the light sources for controlling the light sources 4 indirectly through the smart drivers 13. It is also shown in Figure 7 that the power supplies 5, 6 are connected to the light sources via the smart drivers 13.

The first 5 and second 6 power supplies are also connected to a power input 8 of the control unit 7 by means of a first 9 and a second diode 10 for supplying operation power to the control unit 7. The forward direction of the diodes 9, 10 is the direction from the first 5 and second 6 power supplies to the control unit 7, respectively. Therefore, back current is prevented if one of the first 5 or second 6 power supplies should fail, since one of the diodes 9, 10 will electrically insulate the failed power supply from the other power supply with this arrangement.

The first 5 and second 6 power supplies can also be connected to a first 11 and a second 12 signal input of said control unit 7 so as to allow the control unit 7, having detecting means, to detect if any of the first 5 or second 6 power supplies fails. Hence, if one of the fuses 14 breaks the control unit 7 can detect which one of the power supplies 5, 6 that fails and apply the right software (SW) mode.

Therefore, if one of the fuses 14 in one of the power supplies 5, 6 breaks/burns, the control unit 7 can operate the smart drivers 13 in such a way that sufficient driving light on both sides is achieved if the first 2 and second 3 sets of lights correspond to left and right exterior lights, respectively. If e.g. a motor vehicle is supplied with left and right main beam lights, dipped beam lights and front fog lights, then if the dipped beam is lost on one side, the fog lights on the same side can be actuated to replace the function of the dipped beam light. If e.g. the motor vehicle does not have fog lights, the main beam light can be actuated to replace the dipped beam light if it is lost, and to prevent glaring light from the main beam light (used as a substitute for the dipped beam light), the light intensity from the main beam light can be reduced by pulsing the voltage supply from the smart drivers 13 to the lamps.

In Figure 7 the light system 1 comprises a first 2 and a second 3 sets of lights representing left front and rear lights, and right front and rear lights, respectively. It is shown in Figure 7 that the first 5 and second 6 power supplies is cross connected to the left and right front lights, and to the left and right rear lights, respectively, according to the principles of the present invention. If the motor vehicle comprises two or more side marking lights on each side, these could also be added to the first 2 and second 3 sets.

It should be understood that more than two sets of lights may be defined, since the new light system architecture according to the invention makes it possible to define a plurality of sets of lights and arrange two or more power supplies 5, 6 in such a manner so that at least one light in each of the plurality of sets of lights can function correct even if one of the power supplies 5, 6 fails.

The invention also relates to a method for connecting a light system 1 in a motor vehicle according to the above described light system architecture.

Finally, it should be understood that the present invention is not limited to the embodiments described above, but also relates to and incorporates all embodiments within the scope of the appended independent claims.

## Claims

1. Light system for a motor vehicle, wherein said light system (1) comprises at least a first (2) and a second (3) set of lights, each set of lights including at least two light sources (4) which are arranged to emit light when being power supplied, **characterised in that** said light system (1) further comprises at least a first (5) and a second (6) power supply, wherein said first (5) and second (6) power supplies are different from each other; and
- said first power supply (5) is arranged to supply power to at least a first light source (4) belonging to said first set of lights (2) and to at least a second light source (4) belonging to said second set of lights (3), and
- said second power supply (6) is arranged to supply power to at least a second light source (4) belonging to said first set of lights (2) and to at least a first light source (4) belonging to said second set of lights (3).

2. Light system (1) according to claim 1, wherein said first set of lights (2) corresponds to left side external lights of said motor vehicle, and said second set of lights (3) corresponds to right side external lights of said motor vehicle.

3. Light system (1) according to claim 2, wherein said left and right side external lights belong to the group comprising: front fog light, main beam, dipped beam, side marker light, front position light, brake light, rear fog light, and rear position light.

4. Light system (1) according to any of the preceding claims, further comprising a control unit (7) connected to each of said light sources (4), wherein said control unit (7) is arranged to control each of said light sources (4).

5. Light system (1) according to claim 4, wherein said control unit (7) includes a processor.

6. Light system (1) according to any of claims 4-5, wherein said first power supply (5) is connected to a power input (8) of said control unit (7) by means of a first diode (9) and said second power supply (6) is connected to said power input (8) by means of a second diode (10), where the forward direction of said first (9) and second (10) diodes is from said first (5) and second (6) power supplies to said control unit (7), respectively, so as to prevent back current if one of said first (5) or second (6) power supplies fails.

7. Light system (1) according to any of claims 4-6, wherein said first power supply (5) is connected to a first signal input (11) of said control unit (7) and said second power supply (6) is connected to a second signal input (12) of said control unit (7) so as to allow said control unit (7), having detecting means, to detect if said first (5) or second (6) power supplies fails.

8. Light system (1) according to any of claims 4-7, wherein a smart driver (13) is connected between said first (5) or second (6) power supplies and each of said light sources (4), and controlled by said control unit (7).

9. Light system (1) according to any of claims 4-8, wherein said control unit (7) is arranged to control said light sources (4) so that at least one light source (4) belonging to said first set of lights (2) and at least one light source (4) belonging to said second set of lights (3) emits light if one of said first (5) and second (6) power supplies fails.

10. Light system (1) according to any of the preceding claims, wherein said first (5) and second (6) power supplies each comprises a fuse (14) connected to a power source (15).

11. Light system (1) according to claim 10, wherein said power source (15) is one or two batteries for a motor vehicle.

12. Light system (1) according to claim 10, wherein said first (5) and second (6) power supplies are connected to the same power source (15) or to two different but identical power sources (15) so as to supply the same voltage.

13. Light system (1) according to any of the preceding claims, wherein said light sources (4) are light emitting diodes, light bulbs or gas discharge lamps.

14. Motor vehicle comprising at least a light system (1) according to any of claims 1-13.

15. Method for connecting a light system in a motor vehicle, wherein said light system (1) comprises at least a first (2) and a second (3) set of lights, each set of lights including at least two light sources (4) which are arranged to emit light when being power supplied, said method being **characterised by** the steps of:
- connecting a first power supply (5) to at least a first light source (4) belonging to said first set of lights (2) and to at least a second light source (4) belonging to said second set of lights (3), and
- connecting a second power supply (6) to at least a second light source (4) belonging to said first set of lights (2) and to at least a first light source (4) belonging to said second set of lights (3), wherein said first (5) and second (6) power supplies are different from each other.
